Europäisches Patentamt

European Patent Office

Office européen des brevets

(19)

(11) **EP 1 211 348 A1**

(12) ## EUROPEAN PATENT APPLICATION

(43) Date of publication:
**05.06.2002 Bulletin 2002/23**

(51) Int Cl.7: **D06M 15/31**, D06M 17/10,
D06M 23/08

(21) Application number: **01127434.7**

(22) Date of filing: **26.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **27.11.2000 JP 2000359979**<br><br>(71) Applicants:<br>• **Toyo Boseki Kabushiki Kaisha**<br>  **Osaka-shi, Osaka 530-8230 (JP)**<br>• **KOMATSU SEIREN CO., LTD.**<br>  **Nomi-gun Ishikawa 929-0124 (JP)**<br>• **JAPAN EXLAN COMPANY, LTD.**<br>  **Osaka-shi Osaka 530 (JP)** | (72) Inventors:<br>• **Nishimoto, Akira**<br>  **Kita-ku, Osaka-shi, Osaka (JP)**<br>• **Shimizu, Kenji**<br>  **Kita-ku, Osaka-shi, Osaka (JP)**<br>• **Shimano, Yasunao**<br>  **Neagari-machi, Nomi-gun, Ishikawa (JP)**<br>• **Takagi, Yasuharu**<br>  **Neagari-machi, Nomi-gun, Ishikawa (JP)**<br>• **Nishida, Ryosuke, Saidaiji Plant**<br>  **Okayama-shi, Okayama (JP)**<br><br>(74) Representative: **Müller-Boré & Partner**<br>  **Patentanwälte**<br>  **Grafinger Strasse 2**<br>  **81671 München (DE)** |

(54) **Moisture-permeable waterproof fabric**

(57)   A moisture-permeable waterproof fabric includes a base fabric, a moisture-permeable resin layer formed on one side of the base fabric and having a nonporous urethane resin film, and a surface protective resin applied in a dry mass of 0.5 to 10 g/m$^2$ on the moisture-permeable resin layer. The surface protective resin contains a hydrophilic urethane resin whose coefficient of moisture absorption is 40% or more at 30 °C and 90% of relative humidity as a main component, and organic fine particles excellent in moisture-absorbing/ releasing property and heat-generating property by moisture absorption.

**EP 1 211 348 A1**

**Description**

The present invention relates to a moisture-permeable waterproof fabric having, in addition to excellent water resistance and moisture permeability, satisfactory surface friction resistance and, in case of being used for clothes, high sweat-dischargability for discharging sweat therethrough when humidity in a space between the clothes and the human body (hereinafter, referred to as "humidity within clothing") increases due to sweating.

As a method of producing the moisture-permeable waterproof fabric, known have been coating method and laminating method. In the coating method, urethane resin solution is directly applied on such a base fabric as woven and knit fabrics obtained from textile materials, and then dried to form a non-porous moisture-permeable resin layer. On the other hand, the laminating method includes forming a non-porous film of urethane resin on a releasing paper; applying and drying urethane resin on the non-porous film to form an adhesive layer; and stacking a base fabric on the adhesive layer, followed by thermocompression bonding.

The moisture-permeable waterproof fabric is used for clothes with its moisture-permeable resin layer being the inside (i.e., human body side) thereof. The moisture-permeable resin layer may be covered with a resin coat mainly composed of urethane resin, in order to prevent the layer from being damaged by friction caused when the clothes is putted on, cleaned and the like.

The moisture permeability of the moisture-permeable waterproof fabric has been regarded as an indicator of comfortability for a person wearing clothes made of the fabric (hereinafter, referred to as "wearer"). The moisture permeability, however, is determined by measuring water amount passing through the fabric under predetermined conditions, that is, by the measurement performed in a steady state. Therefore, the conventional moisture-permeable waterproof fabric has not been considered to be effectively used in case where the wearer feels uncomfortable by an extraordinarily increased humidity within clothing (i.e., humidity in a space between the human body and the clothes) due to his sweating. Considering usual movements of the wearer, his movements in most cases vary quantitatively every second. In general, his sweat amount varies according to such a variation of the movements. Thus, the conventional moisture-permeable waterproof fabric had a disadvantage that, although it keeps the wearer feeling comfortable when he takes a relatively light exercise, it may make him feel humid and uncomfortable when his sweat amount rapidly increases.

According to an aspect of the present invention, which can overcome the aforementioned problems of prior art technology, a moisture-permeable waterproof fabric includes a base fabric; a moisture-permeable resin layer formed on one side of the base fabric and including a non-porous urethane resin film; and a surface protective resin applied in a dry mass of 0.5 to 10 $g/m^2$ on the moisture-permeable resin layer. The surface protective resin containing a hydrophilic urethane resin whose coefficient of moisture absorption is 40% or more at 30 °C and 90% of relative humidity as a main component; and organic fine particles having excellent moisture-absorbing/ releasing property (that is, both properties of absorbing moisture and releasing absorbed moisture) and exhibiting heat-generating property by moisture absorption (that is, property of generating heat when absorbing moisture).

The high moisture-absorbing/releasing and heat-generating organic fine particles, for example, can be produced by chemically transforming nitrile groups in the following acrylonitrile cross-linked polymer into carboxylate salt groups through hydrolysis. The acrylonitrile cross-linked polymer is obtained by introducing a crosslinking structure into an acrylonitrile polymer through hydrazine compound treatment, or by introducing a crosslinking structure by using, as a comonomer, a compound having two or more polymerizable vinyl groups. In either case, the organic fine particles preferably include 1.0 mmol/g or more of the carboxylate salt groups.

It is also preferred that, when used for clothes, the fabric can effectively lower an increasedhumidity within clothing (i.e., humidity in a space between the human body and the clothes) due to sweating. The fabric, accordingly, has 3%RH or more of a humidity difference, ΔH [the following equation (1)], between humidities under the following respective conditions, $H_0$ and $H_s$, measured with the following sweat simulator at 10°C and 50% of relative humidity.

$$\Delta H = H_0 - H_s \tag{1}$$

$H_s$: when using the moisture-permeable waterproof fabric in which the moisture-permeable resin layer is formed on the one side of the base fabric and the surface protective resin is further applied thereon, humidity (%RH) of the surface protective resin-applied side of the fabric

$H_0$: when using a coated base fabric in which the moisture-permeable resin layer is formed on one side of the base fabric, humidity (%RH) of the moisture-permeable resin layer side of the coated base fabric

The sweat simulator and conditions for measuring the above-mentioned humidities $H_s$, $H_0$ are described below.

Sweat simulator:

A sweat simulator includes a thermogenesis sweat mechanism having a substrate with holes that liquid can pass through and a thermogenerator; a water supply mechanism for supplying the holes with water; a thermogenesis control mechanism for controlling temperature of the thermogenerator; and a temperature and humidity sensor. It should be noted that the holes simulate pores, that is, holes in a skin that liquid, especially sweat can pass through. The substrate, which is made of brass, has an area of $120cm^2$ and is provided with six holes therethrough. The thermogenerator including a sheet heater controls the substrate temperature to keep it constant at a predetermined temperature. The water supply mechanism sends water at a constant rate to the holes of one surface of the substrate with a tube pump. The other surface of the substrate is covered with a simulated skin of polyester multifilament fabric having a thickness of 0.1mm to 0.6mm. The simulated skin allows water discharged through the holes to spread over the substrate surface, to produce a sweat condition. The substrate has a 1cm high outer flame around the periphery thereof. This makes possible to arrange a sample fabric in a position spaced apart 1cm from the substrate surface. The temperature and humidity sensor is located in a space between the substrate and the sample fabric, and used for measuring humidity of "a space surrounded by the substrate, the sample fabric and the outer flame" under the sweat condition. This space simulates, when the fabric is used for clothes, a space between the clothes and its wearer (hereinafter, referred to as "simulated inner clothes space").

Standard sweat condition:

In a standard condition, the predetermined temperature of the substrate and the constant rate for supplying water, i.e., sweat amount are respectively 37°C and $270(g/m^2)/hr$.

Measuring method:

For humidity measurement, used are a sample coated base fabric for measuring $H_0$ in which the moisture-permeable resin layer is formed on one side of the base fabric; and a sample moisture-permeable waterproof fabric for measuring $H_s$ in which the surface protective resin is further applied on the moisture-permeable resin layer formed on the base fabric. A moisture impermeable film made of polyvinyl chloride is then provided on the moisture-permeable resin layer side of the sample coated base fabric (or the surface protective resin-applied side of the sample moisture-permeable waterproof fabric), to block the moisture penetration from the simulated skin to the sample fabrics. The sample fabrics are arranged in a manner that the moisture-permeable resin layer side or the surface protective resin-applied side (i.e., moisture impermeable film side) faces to the simulated skin side of the substrate. With using the temperature and humidity sensor, a preliminary humidity measurement of the simulated inner clothes space is started. The simulated inner clothes space becomes humid due to the moisture impermeable film and, when the humidity thereof reaches 95%, the moisture impermeable film is removed to start a main measurement. The main measurement is performed for two minutes with recording the measured humidity every two seconds. The above-mentioned $H_s$ and $H_0$ respectively mean the minimum values of the sample moisture-permeable waterproof fabric humidity and the sample coated base fabric humidity that are measured during the main measurement.

According to the present invention, by applying the surface protective resin containing the organic fine particles, which have excellent moisture-absorbing/ releasing property and exhibit heat-generating property by moisture absorption, on the moisture-permeable resin layer formed on the base fabric, provided can be moisture-permeable waterproof fabric exhibiting not only excellent moisture permeability and water resistance but also satisfactory friction resistance. The clothes obtained from such fabric are excellent in sweat dischargability due to the organic fine particles. In other words, humidity within clothing (i.e., humidity in a space between the human body and the clothes) can be effectively lowered, even when the humidity raises as the sweat amount increases. In addition, the organic fine particles were dispersed into the surface protective resin. The surface protective resin has no chance to permeate into the base fabric. Therefore, it is hardly possible that too large amount of the organic particles project of the surface protective resin. Furthermore, since the organic fine particles have no chance to penetrate into the base fabric, such particles cannot deteriorate the effect thereof and original functions of the base fabric.

As described above, the conventional moisture-permeable waterproof fabric has the following problem. The conventional fabric has not been considered to be effectively used in such a case that, when a person wears clothes made of the fabric, the wearer feels uncomfortable by an increased humidity within clothing (i.e., humidity in a space between the wearer's body and the clothes) due to his sweat. Accordingly, in case where his sweat amount rapidly increases, the wearer feels that his inner clothes space becomes humid and therefore feels uncomfortable, although the clothes can keep him comfortable in case where he takes light exercise.

In order to solve the problem described above, the inventors directed their attention to high moisture-absorbing/ releasing and heat-generating organic fine particles. Hereinafter, such organic fine particles are simply referred to as "organic fine particles" in some cases. By providing the organic fine particles on the human body side of the moisture-permeable waterproof fabric, the increased moisture due to the increase of sweat amount can be quickly absorbed by the organic fine particles and then the absorbed moisture is discharged to the outside (i.e., the opposite side of the human body) of the moisture-permeable waterproof fabric. This results in lowering the humidity within clothing, that is, the humidity in a space between the human body and the clothes.

However, when the above-mentioned organic fine particles are dispersed into a solution used as a raw material for the moisture-permeable resin layer and the solution is then applied and dried on the base fabric to form the moisture-permeable resin layer, the organic fine particles are likely to penetrate into spaces among threads of the base fabric, thereby deteriorating the effect given by the particles and the original functions of the base fabric. In addition, it is difficult to improve the water resistance of the fabric having such a structure that the organic fine particles are dispersed into the moisture-permeable resin layer. Moreover, when excessive amount of the organic fine particles-dispersed moisture-permeable resin solution penetrates into the base fabric and, therefore, a thinner moisture-permeable resin layer is formed by drying the solution, too large portion of the organic fine particles are likely to project beyond the thinner moisture-permeable resin layer, resulting in fears that the projected particles partly drop from the layer and that the dropping causes defects in the layer.

On the other hand, the conventional moisture-permeable waterproof fabric has a protective resin layer on the moisture-permeable resin layer surface to protect the moisture-permeable resin layer. The inventors directed their attention to this protective resin layer and added the above-mentioned organic fine particles not in the moisture-permeable resin layer but in the surface protective resin, which is applied on the moisture-permeable resin layer. As a result, the effect of the organic fine particles can be effectively used for improving the fabric properties without deteriorating the original functions of the base fabric, to accomplish the present invention. The organic fine particles can contribute not only to lowering humidity within clothing but also to improving friction resistance of the fabric.

The base fabric according to the present invention particularly includes woven, knit, non woven fabrics and the like obtained from either one or more of polyester synthetic fiber, polyamide synthetic fiber, polyacrylonitrile synthetic fiber, semi synthetic fiber such as rayon and acetate, and natural fiber such as cotton and wool. These base fabrics may be subjected to water-repellent treatment, in advance. The treatment makes easier to control the penetrating amount of urethane resin into the base fabric, that is, respective penetrating amounts of urethane resin forming the moisture-permeable resin layer and another urethane resin used as an adhesive. In the water-repellent treatment, fluorine and silicon water-repellent may be used.

At least one side of the above-mentioned base fabric, formed may be a moisture-permeable resin layer including a non-porous urethane resin film. The urethane resin used for the non-porous urethane resin film is hydrophilic and may include known moisture-permeable urethane resins. In case of using the known resins, any hydrophilic resins such as one part type resins and two part type resins to be cured with isocyanate may be used without any particular limitation. As the isocyanate for curing the two part type resin, aliphatic isocyanates is more preferable than aromatic isocyanates from the viewpoint of moisture permeability and weather resistant.

Examples of the one part type resin include ether-based urethane resin solution. In particular, used may be a dimethyl formamide solution containing 25-35 mass% of polyurethane resin, which is made from polyethylene glycol, modified polyethylene glycol, ethylene glycol and 4-4'-diphenylmethane diisocyanate, having 30-60 mass% of oxyethylene group and 5-15 mass% of ethylene glycol as a component for elongation of the polymer chain thereof.

It should be noted that these urethane resins might be added with a variety of additives such as titanium oxide for the purpose of improving coloring and other properties.

The above-mentioned urethane resin solution is applied on a releasing paper and dried, to obtain a non-porous urethane resin film. The method for applying the resin solution is not especially limited and includes any method in which the resin solution can be applied on the releasing paper so as to give an uniform thickness thereof. In particular, coating methods with using a knife, comma and roll coaters may be adopted. The method for drying the applied resin solution is also not especially limited. For example, used can be a method in which the resin solution is dried at about 100-150°C with an air oven or the like.

It is recommended that the lower limit of the applied amount of the urethane resin is determined so that the urethane resin film obtained by drying the applied urethane resin has a thickness of 1 µm or more, preferably 3 µm or more and more preferably 5 µm or more. When the applied amount is less than the above-mentioned range, the urethane resin film cannot exhibit the required water resistance for constituting the moisture-permeable resin layer. On the other hand, considering too thick moisture-permeable resin layer has an decreased moisture permeability, it is recommended that the upper limit of the applied urethane resin amount is determined so that the urethane resin film thickness is 30 µm or less, preferably 25 µm or less and more preferably 20 µm or less.

On the obtained urethane resin film by applying and drying the urethane resin solution on the releasing paper as described above, formed is an urethane resin layer that serves as an adhesive in laminating between the urethane resin film and the base fabric (hereinafter, referred to as "adhesive layer"). As the adhesive, two part hardening system type urethane resins, which have been used for the conventional moisture-permeable waterproof fabric, can be used.

As the isocyanate for curing the urethane resin adhesive, it is more preferred to use aliphatic isocyanates than aromatic ones from a viewpoint of keeping the moisture permeability of the invention moisture-permeable waterproof fabric.

Concrete examples of the urethane resin solution used as the adhesive includes polyester ether-based urethane resin containing 20-30 mass% of oxyethylene group dissolved in a mixed solvent of toluene / methyl ethyl ketone / dimethyl formamide (solid content: 40-60 mass%), but not limited thereto.

The application method of the urethane resin adhesive on the urethane resin film formed on the releasing paper, which is not particularly limited, includes methods for applying the adhesive on the entire film surface with using, for example, knife, comma and roll coaters, and methods for applying the adhesive in spots of the film surface with using a gravure roll.

After the application of the adhesive, the base fabric is laminated on the urethane resin film through the adhesive. As the lamination method, any of wet and dry lamination methods can be used. In the wet method, the base fabric is directly stacked on the applied wet adhesive, followed by drying. In the dry method, after the applied adhesive is dried, the base fabric is stacked on the dried adhesive to paste it on the film. In either case, after the lamination, the laminate of the film and base fabric is separated from the releasing paper, to obtain a coated base fabric in which the moisture-permeable resin layer including the non-porous urethane resin film is formed on the base fabric. Besides the above-described lamination methods, it is possible to apply and dry the urethane resin solution (to form the moisture-permeable resin layer) directly on the base fabric, to obtain the base resin.

Thereafter, the surface protective resin is applied on the above-mentioned moisture-permeable resin layer. The main component of the surface protective resin is required to have a satisfactory moisture permeability and therefore should be hydrophilic urethane resins having a coefficient of moisture absorption of 40% or more at 30°C and 90% of relative humidity. Any urethane resins having such property can be used whether it is so-called one part type resin or two part type resin that is to be cured with isocyanate, and without particularly limited. As described above, the present invention also aims at improving the friction resistance of the surface protective resin by adding the organic fine particles therein. Accordingly, the same urethane resins as used for the moisture-permeable resin layer can be used as the surface protective resin.

In the surface protective resin, added are high moisture-absorbing/ releasing and heat-generating organic fine particles. As raw material for such particles, acrylonitrile cross-linked polymer may be used. The "acrylonitrile cross-linked polymer" means, in particular, polymers produced as follows: A comonomer composition including a compound having at least polymerizable vinyl group and nitryl group such as acrylonitrile and, if necessary, other comonomers is copolymerized to obtain an acrylonitrile polymer, and then the polymer is subjected to a treatment with hydrazine compound to introduce a crosslinking structure thereinto; Alternatively, the above-mentioned composition is further added, as a comonomer component for forming crosslinking structure, with a compound containing more than two polymerizable vinyl groups, to prepare another comonomer composition, and a crosslinking structure is introduced in the copolymerization process of the another composition. As the other comonomers, used can be vinyl halide, vinylidene halide, acrylic ester, methacrylic ester, sulfonic acid group-containing monomer or salts thereof such as p-styrene sulfonate, carboxyl group-containing monomer or salt thereof such as acrylic acid, acrylamide, styrene, vinyl acetate and/or the like. As the compound containing 2 or more polymerizable vinyl groups, it is preferred to use divinylbenzene, triallyl isocyanurate and/or the like. Moreover, as the hydrazine compound, used can be hydrazine; hydrazine hydrate; hydrazinium salts such as hydrazinium sulfate, hydrazinium hydrochloride. hydrazinium nitrate, hydrazinium bromate and hydrazinium carbonate; hydrazine derivatives such as ethylene diamine, guanidine sulfate, guanidine hydrochloride, guanidine nitrate, guanidine phosphate and melanin; and/or the like. These other comonomers, compound containing 2 or more polymerizable vinyl groups and hydrazine compounds can be respectively used solely or in combination thereof.

The organic fine particles exhibiting such properties include organic fine particles, for example, obtained by chemically transforming nitrile groups contained in acrylonitrile cross-linked polymer mentioned below into carboxylate salt groups (i.e., metal-containing carboxyl group, for example -COONa) by hydrolysis and, as a result, containing 1.0 mmol/g or more of the carboxylate salt groups. The acrylonitrile cross-linked polymer includes polymers produced by: copolymerizing a comonomer composition containing 50 mass% or more of acrylonitrile into an acrylonitrile polymer and introducing a crosslinking structure into the acrylonitrile polymer with a hydrazine compound; or copolymerizing a comonomer composition containing 50 mass% or more of aorylonitrile and a compound containing 2 or more polymerizable vinyl groups. Concrete examples of the organic fine particles include (a) polymers obtained as follows: a comonomer composition containing 85 mass% or more of acrylonitrile is copolymerized into an acrylonitrile polymer; the polymer is subjected to a treatment with a hydrazine compound for introducing a crosslinking structure thereinto so as to increase the nitrogen content thereof In 1.0-15.0 mass% to obtain an acrylonitrile cross-linked polymer; and the remained nitrile groups contained in the obtained polymer is chemically transformed into carboxylate salt groups by hydrolysis, and, as a result, having 1.0 mmol/g or more of the carboxylate salt group and (b) polymer obtained by as follows: a comonomer composition containing 50 mass% or more of acrylonitrile, divinylbenzene or triallyl isocyanurate, and other comonomers is copolymerized into an acrylonitrile cross-linked polymer introduced a crosslinking structure thereinto; and the nitrile groups contained in the obtained polymer are chemically transformed into carboxylate salt groups by hydrolysis, and, as a result, the polymer has 2.0 mmol/g or more of the carboxylate salt groups.

It should be noted that "the increase of nitrogen content' of the polymer (a) means a difference between the nitrogen content (mass%) of the aorylonitrile polymer, which is used as the raw material, and that of the crosslinking structure-introduced polymer (i.e., acrylonitrile cross-linked polymer) obtained by subjecting the above-mentioned acrylonitrile polymer to the hydrazine compound treatment. When the nitrogen content increase is less than the above-defined range, the organic fine particles may dissolve by the hydrolysis process. This prevents introduction of the carboxylatesalt group into the acrylonitrile cross-linked polymer. On the other hand, when the nitrogen content increase is greater than the above-defined range, 1.0 mmol/g or more of the nitrile groups may not be transformed into carboxylate salt groups. In addition, the method for introducing crosslinking structure due to the hydrazine compound into the acrylonitrile polymer is not particularly limited, as long as the introduced crosslinking structure can give a nitrogen content increase of 1.0-15.0 mass%. However, it is desired from an industrial viewpoint to treat the acrylonitrile polymer with the hydrazine compound having a concentration of 1-80mass% at 50-120°C for 0.2-10 hours.

In order to prevent the moisture-permeable waterproof fabric from feeling rough, the average diameter of the organic fine particles is desirably 5 μm or less. The organic fine particles having such diameter can be contained in the surface protective resin by a variety of methods. For instance, the organic fine particles having the desirable diameter obtained by milling may be added and dispersed into the surface protective resin solution. Alternatively, the organic particles having a diameter greater than the desirable range may be added in the solution, followed by a wet dispersion during which the organic fine particles are reduced in the diameter thereof. It is also preferred that the organic particles are contained in the surface protective resin in an amount of 5 mass parts to 60 mass parts with respect to 100 mass parts of solid content of the resin. When the amount of the organic fine particles is less than the lower limit, the effect resulting from adding such particles cannot be sufficiently obtained. More preferable lower limit of the organic fine particle amount is 10 mass parts or more. On the other hand, when the organic fine particle amount is beyond the upper limit, the strength of such surface protective resin may decrease and the appearance of the moisture-permeable waterproof fabric may be deteriorated. More preferable upper limit of the organic fine particle amount is 50 mass part or less.

Thus obtained organic fine particle-containing surface protective resin solution is then applied and dried on the moisture-permeable resin layer, to give the inventive moisture-permeable waterproof fabric. As the application method, the known methods such as application with gravure roll can be adopted. It is necessary that the solution be applied in a dry mass of 0.5-10g/m$^2$. When the applied amount of the solution is less than the above-mentioned range, the effect resulting from the surface protective resin cannot be sufficiently obtained. Preferable lower limit of the applied amount is 1 g/m$^2$ or more. On the other hand, when the applied amount is beyond the above-mentioned range, the fabric is likely to feel stiff. Preferable upper limit of the applied amount is 6 g/m$^2$ or less.

It is also recommended that the inventive moisture-permeable waterproof fabric gives ΔH, the humidity difference calculated by above-mentioned equation (1), of 3%RH or more, preferably 5%RH or more and more preferably 7%RH or more. If the fabric gives ΔH less than the above-mentioned range, it is considered not to efficiently exhibit the effect of decreasing the humidity within clothing (the humidity in a space between the human body and the clothes). Accordingly, such a fabric cannot satisfactorily achieve the objects of the present invention.

The inventive moisture-permeable waterproof fabric is, if necessary, further subjected to a water repellent treatment with a water-repellent such as fluorine and silicone. In addition, it undergoes a set of finishing to remove rivelling from the fabric surface and conform the fabric to the specification, to obtain a product. Moreover, the fabric may undergo a paper calendar treatment to improve its feeling.

The invention is now described in further detail with reference to some examples of its embodiment. It is to be understood that the mode of carrying out the invention is not limited to the following examples, but various modifications may be made therein within the spirit and scope of the invention. It should be noted that "%" and "part" means those as the basis for mass thereinafter, if not specified.

In the examples, measurements and evaluations are respectively performed as follows.

(A) Coefficient of moisture absorption of resin film Urethane resin solution is applied on a releasing paper in a thickness of 0.09 mm through an applicator and dried at 125 °C. The dried urethane resin is removed from the paper, to obtain a non-porous urethane resin film. The film is then subjected to a drying under reduced pressure at 100 °C for 3 hours, followed by a measurement of its absolute dry mass. Thereafter, the film is left for 12 hours in an atmosphere of 30 °C and 90% of relative humidity, and then the film mass after the film absorbs moisture from the atmosphere is measured. The coefficient of moisture absorption of the film is calculated by the measured values according to the following equation.

$$\text{coefficient of moisture absorption (\%)} = \{(\text{film mass after}$$

moisture absorption - absolute dry film mass)/ absolute dry film

mass$\} \times 100$

(B) Diameter of organic fine particles, which is excellent in moisture-absorbing/ releasing property and heat-generating property by moisture absorption, contained in the surface protective resin

The surface of the moisture-permeable waterproof fabric is photographed at ×1000 magnification through scanning electron microscope (manufactured by topcon, ABT-32). From the photograph, an image of 20 μm × 20 μm is selected, to directly measure the diameter of each particle included in the image. The average diameter of organic fine particle is obtained from the measured values.

(C) Moisture permeability of moisture-permeable waterproof fabric

The moisture permeability of the fabric is measured by L-1099 A-1 method (calcium chloride method) and B-1 method (potassium acetate method) both according to JIS standard. To show the results, the unit is converted to 24 hours.

(D) Water resistance of moisture-permeable waterproof fabric

Water resistance of the fabric is measured by L-1092 A and B methods according to JIS standard.

(E) Friction resistance of moisture-permeable waterproof fabric surface

With using color fastness to rubbing tester (manufactured by Daieikagakusha), the fabric surface is rubbed 100 times by cotton, with a load of 200g applied thereto. After the rubbing, the fabric surface is observed visually and its friction resistance is evaluated according to the following criteria.

○: No scratch is observed on the fabric surface.
Δ: Slight scratch is observed on the fabric surface.
× : Distinct scratch is observed on the entire fabric surface.

(F) Measurement of ΔH

With using the above-described sweat simulator, measurements of $H_s$ and $H_0$ are performed according to the above-described conditions. From the measured values, ΔH is calculated according to the above-mentioned equation (1).

[Production of high moisture-absorbing/ releasing and heat-generating organic fine particles]

450 parts of acrylonitrile, 40 parts of methyl acrylate, 15 parts of p-styrene sodium sulfonate and 1180 parts of water were put in an autoclave and added, as polymerization initiator, with 0.5% of di-tert-butylperoxide with respect to the total mass of the monomers. After the autoclave was closed, polymerization of the monomers was performed at 150 °C for 20 minutes with stirring. When the polymerization was completed, the obtained polymer was cooled to about 90°C with continuing the stirring, to obtain raw material particles having an average diameter of 0.5 μm (measured by light scattering photometer) dispersed into water. To the water-dispersing particles, hydrazine was added so as to give a concentration of 35%, followed by a crosslinking treatment at 102°C for 2.5 hours. Subsequently, NaOH was further added so as to give a concentration of 10%, followed by hydrolysis treatment at 102°C for 5 hours. The treated water-dispersing particles underwent dialysis in running water, desalting and drying, to obtain high moisture-absorbing/ releasing and heat-generating organic fine particles. The organic fine particles had 3.3%-increased nitrogen content from the raw material particles, carboxylate salt groups in a content of 4.3 mmol/g, a moisture percentage of 45% at 65%RH and an average diameter of 52 μm.

Inventive Example

With using the produced organic fine particles, surface protective resin solution having the following composition was prepared;

Ether-based urethane resin solution containing urethane modified with polyethylene glycol (solid content: 29%) : 100 parts
the produced organic fine particles: 11.6 parts
dimethyl formamide: 30 parts
toluene: 30 parts

The organic fine particles and then dimethyl formamide were added to the urethane resin solution and dispersed with a beads mill so as to reduce the organic fine particle average diameter to 3 μm. Thereafter, toluene was added to the solution, to obtain the objective urethane resin solution. The objective urethane resin solution was applied and dried on a releasing paper and then separated from the paper, to obtain a resin film. The coefficient of moisture absorption of the resin film was 41%. This proves that the film had extremely high moisture absorbability.

Subsequently, urethane resin solution for forming the moisture-permeable resin layer was prepared. The composition of the resin solution includes the followings:

> Ether-based urethane resin solution containing urethane modified with polyethylene glycol (solid content: 29%): 100 parts
> methyl ethyl ketone: 65 parts
> white pigment: 7 parts

The prepared resin solution was applied on a releasing paper in a thickness of 0.09 mm and dried at 125°C, to obtain a non-porous urethane resin film. On this urethane resin film, an adhesive solution having the following composition was applied in a thickness of 0.10 mm and dried at 125 °C, to form an adhesive layer. Thereafter, nylon oxford was stacked on the adhesive layer to paste the nylon oxford and the urethane resin film through the adhesive layer, followed by pressing with heat at a temperature of 125 °C and a pressure of 118 kPa (1.2 kgf/cm$^2$) for the thermo compression bonding therebetween, to obtain a coated base fabric.
Urethane resin solution composition for adhesive

> polyester ether-based urethane resin solution (solid content: 41%): 100 parts
> toluene: 30 parts
> methyl ethyl ketone: 10 parts
> Takenate WD-725 (hydrophilic group-containing aliphatic isocyanate manufactured by Takeda chemical industry): 9 parts
> curing catalyst H1215 (manufactured by Dainichiseika); 0.5 part

On the obtained moisture-permeable resin layer of the coated base fabric, the above-described surface protective resin solution was applied with gravure roll and dried at 120°C. The surface protective resin surface was further subjected to a water repellent treatment with Asahi guard AG5690 (fluorine water-repellent. manufactured by Asahiglass company) and then a set of finishing at 140 °C, to achieve the inventive moisture-permeable waterproof fabric. Then, the above-mentioned respective measurements and evaluations were performed with respect to this moisture-permeable waterproof fabric. The results are shown in table 1.

Comparative Example 1

A moisture-permeable waterproof fabric was obtained in the same manner as in the inventive example except that no surface protective resin was applied on the moisture-permeable resin layer. The obtained fabric (i.e., coated base fabric) underwent the above respective measurements and evaluations. The results are shown in table 1.

Comparative Example 2

A moisture-permeable waterproof fabric was obtained in the same manner as in the inventive example except that the organic fine particles did not add to the surface protective resin solution. The obtained fabric underwent the above respective measurements and evaluations. The results are shown in table 1.

Comparative Example 3

A moisture-permeable waterproof fabric not including the moisture-permeable resin layer was obtained by applying the surface protective resin solution directly on the base fabric with gravure roll and drying the resin solution. In this comparative example, the base fabric surface could not be covered completely with the surface protective resin, resulting in giving a non-practical fabric having a poor water resistance of 0 kPa.

Comparative Example 4

A moisture-permeable waterproof fabric was obtained in the same manner as in the inventive example except that: 1) as the resin solution for the moisture-permeable resin layer, used was the surface protective resin solution without being added with toluene after the dispersion with beads mill and 2) no surface protective resin was applied on the moisture-permeable resin layer. In this comparative example, the obtained fabric had a poor water resistance of 19.6 kPa and therefore was not practically used.

Table 1

| | Dried amount of applied surface protective resin $(g/m^2)$ | Water resistance (kPa) | Moisture permeability (by A-1 method) $(g/m^2 \cdot 24hr)$ | Moisture permeability (by B-1 method) $(g/m^2 \cdot 24hr)$ | $\Delta H$ (%RH) | Friction resistance |
|---|---|---|---|---|---|---|
| Inv. Ex. | 3.1 | > 196 | 3200 | 13300 | 3 | ○ |
| Comp. Ex 1 | 0 | > 196 | 3200 | 13000 | - | △ |
| Comp. Ex 2 | 3.0 | > 196 | 2900 | 11500 | 0 | △ |

EP 1 211 348 A1

The followings can be considered from the results shown in table 1.

Although the moisture-permeable waterproof fabric of the inventive example has the surface protective resin existing on the moisture-permeable resin layer, it exhibits almost as high moisture permeability as that of comparative example 1 without having such surface protective resin. On the other hand, the moisture-permeable waterproof fabric of comparative example 2, which has the surface protective resin containing no organic fine particles excellent in moisture-absorbing/ releasing property and heat-generating property by moisture absorption, has decreased moisture permeability. These facts reveal that, in the moisture-permeable waterproof fabric of the inventive example, the organic fine particles contained in the surface protective resin suppress the moisture permeability decrease of the fabric due to the application of the surface protective resin.

In addition, the moisture-permeable waterproof fabric of the inventive example has $\Delta H$ greater than that of comparative example 2. Accordingly, in case where a person wears clothes made of the moisture-permeable waterproof fabric of the inventive example, an increased humidity within clothing (i.e., humidity in a space between the human body and the clothes) when he sweats can be lowered due to the effect of the organic fine particles. It should be noted that the moisture-permeable waterproof fabric of comparative example 1 do not have $\Delta H$, because the measured humidity thereof is served as $H_0$ that is the basis for $\Delta H$ calculation with respect to the other clothes.

Moreover, it is proved that the organic fine particles improve surface friction resistance of the moisture-permeable waterproof fabric of the inventive example.

Furthermore, the moisture-permeable waterproof fabric of the inventive example also exhibits as good water resistance as those of comparative examples 1 and 2.

As described above, in comparative example 3 in which only surface protective resin was applied on the base fabric and comparative example 4 in which no surface protective resin was used, the respective moisture-permeable waterproof clothes are so poor in water resistance that they cannot be practically used.

This application is based on patent application No. 2000-359979 filed in Japan, the contents of which are hereby incorporated by references.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds are therefore intended to be embraced by the claims.

**Claims**

1. A moisture-permeable waterproof fabric comprising:

    a base fabric;
    a moisture-permeable resin layer formed on one side of the base fabric and including a non-porous urethane resin film: and
    a surface protective resin applied in a dry mass of 0.5 to 10 $g/m^2$ on the moisture-permeable resin layer, the surface protective resin containing
        a hydrophilic urethane resin whose coefficient of moisture absorption is 40% or more at 30 °C and 90% of relative humidity as a main component, and
        high moisture-absorbing/ releasing and heat-generating organic fine particles.

2. A moisture-permeable waterproof fabric according to claim 1, wherein the high moisture-absorbing/ releasing and heat-generating organic fine particles are produced by introducing a crosslinking structure into an acrylonitrile polymer through hydrazine compound treatment to obtain an acrylonitrile cross-linked polymer; and chemically transforming nitrile groups in the acrylonitrile cross-linked polymer into carboxylate salt groups through hydrolysis, and the organic fine particles include 1.0 mmol/g or more of the carboxylate salt groups.

3. A moisture-permeable waterproof fabric according to claim 1, wherein the highmoisture-absorbing/ releasing and heat-generating organic fine particles are produced by introducing a crosslinking structure by using, as a comonomer, a compound having two or more polymerizable vinyl groups to obtain an acrylonitrile cross-linked polymer; and chemically transforming nitrile groups in the acrylonitrile cross-linked polymer into carboxylate salt groups through hydrolysis, and the organic fine particles include 1.0 mmol/g or more of the carboxylate salt groups.

4. A moisture-permeable waterproof fabric according to anyone of claims 1 to 3, wherein the fabric has 3%RH or more of a humidity difference, $\Delta H$, between humidities under the following respective conditions, $H_0$ and $H_s$, measured with a sweat simulator at 10°C and 50% of relative humidity;

$H_s$: when using the moisture-permeable waterproof fabric in which the moisture-permeable resin layer is formed on the one side of the base fabric and the surface protective resin is further applied thereon, humidity (%RH) of the surface protective resin-applied side of the fabric;

$H_0$: when using a coated base fabric in which the moisture-permeable resin layer is formed on one side of the base fabric, humidity (%RH) of the moisture-permeable resin layer side of the coated base fabric.

**European Patent Office**

**EUROPEAN SEARCH REPORT**

Application Number

EP 01 12 7434

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 933 467 A (TOYO BOSEKI) 4 August 1999 (1999-08-04) * page 3, line 36 - page 4, line 14 * * page 5, line 10 - line 27 * * page 7, line 34 - line 56 * | 1-4 | D06M15/31 D06M17/10 D06M23/08 |
| L | PATENT ABSTRACTS OF JAPAN vol. 2000, no. 14, 5 March 2001 (2001-03-05) & JP 2000 328457 A (TOYOBO CO LTD), 28 November 2000 (2000-11-28) * abstract * | 1-4 | |
| A | PATENT ABSTRACTS OF JAPAN vol. 009, no. 283 (C-313), 9 November 1985 (1985-11-09) & JP 60 126386 A (HIRAOKA SHIYOKUSEN KK), 5 July 1985 (1985-07-05) * abstract * | 1 | |
| | | | TECHNICAL FIELDS SEARCHED (Int.Cl.7) D06M D06N B32B |

The present search report has been drawn up for all claims

| Place of search | Date of completion of the search | Examiner |
|---|---|---|
| MUNICH | 25 February 2002 | Koegler-Hoffmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 12 7434

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2002

| Patent document cited in search report | | Publication date | Patent family member(s) | | Publication date |
|---|---|---|---|---|---|
| EP 0933467 | A | 04-08-1999 | JP | 11247069 A | 14-09-1999 |
| | | | JP | 11279953 A | 12-10-1999 |
| | | | JP | 2000129574 A | 09-05-2000 |
| | | | JP | 2000126566 A | 09-05-2000 |
| | | | EP | 0933467 A2 | 04-08-1999 |
| | | | US | 6046119 A | 04-04-2000 |
| JP 2000328457 | A | 28-11-2000 | NONE | | |
| JP 601263867 | A | | NONE | | |